(19) Europäisches Patentamt
European Patent Office
Office européen des brevets

(11) **EP 2 585 801 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(51) Int Cl.:
***G01K 5/00*** *(2006.01)* ***G01K 7/16*** *(2006.01)*

(21) Anmeldenummer: **11718759.1**

(86) Internationale Anmeldenummer:
**PCT/EP2011/057637**

(22) Anmeldetag: **11.05.2011**

(87) Internationale Veröffentlichungsnummer:
**WO 2011/160893 (29.12.2011 Gazette 2011/52)**

(54) **WIDERSTANDSTEMPERATURSENSOR**

RESISTANCE TEMPERATURE SENSOR

CAPTEUR DE TEMPÉRATURE À RÉSISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2010 DE 102010030442**

(43) Veröffentlichungstag der Anmeldung:
**01.05.2013 Patentblatt 2013/18**

(73) Patentinhaber: **Endress+Hauser Wetzer GmbH+Co. KG**
**87484 Nesselwang (DE)**

(72) Erfinder:
• **SEEFELD, Peter**
**87459 Pfronten (DE)**
• **BUCHNER, Reinhard**
**87484 Nesselwang (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 0 828 146 GB-A- 2 426 336**

**Beschreibung**

Die Erfindung bezieht sich auf einen Widerstandstemperatursensor und auf ein Messgerät mit einem solchen Widerstandstemperatursensor.

Aus dem Stand der Technik sind temperaturabhängige Widerstände, Anordnungen umfassend mehrere solche Widerstände und Messgeräte, die solche Widerstände zur Erfassung einer Prozessgröße, insbesondere der Temperatur, verwenden, bekannt geworden.

So offenbart bspw. die Offenlegungsschrift EP 0828146 A1 eine selbstüberwachende Temperaturmessvorrichtung mit einem ersten und einem zweiten Widerstandselement mit positivem bzw. negativem Widerstandskoeffizienten. Die beiden Widerstandselemente liegen in parallelen Strompfaden, wovon einer eine Diode beinhaltet, die den Stromfluss in nur eine Richtung ermöglicht. Durch einen entsprechenden Schaltkreis, der periodisch eine an den Strompfaden angelegte Spannung ändert, insbesondere umpolt, werden dann die Widerstände der beiden Widerstandselemente bestimmt.

Auch aus dem Gebrauchsmuster DE 202004021438 U1 ist eine Anordnung von Sensorelementen bekannt geworden. Die Sensorelemente weisen dabei elektrische Impedanzen auf, die sich bzgl. ihres Temperaturkoeffizienten unterscheiden und thermisch miteinander und mit dem zu messenden Medium gekoppelt in einem Sensorkopf integriert sind.

Aus der Offenlegungsschrift DE 102006005393 A1 ist ein Widerstandstemperatursensor bekannt geworden, der aus einer ersten und einer zweiten bspw. in Dünnfilmtechnik hergestellten Sensoreinheit besteht, wobei die Sensoreinheiten in parallel zueinander verlaufenden Ebenen übereinander angeordnet sind, um einen kompakten Aufbau des Widerstandstemperatursensors zu ermöglichen.

Diese Anordnungen benötigen aber aufgrund der getrennt ausgeführten Temperatursensoren eine aufwendige Verkabelung sowie einen erhöhten Platzbedarf bzw. sind zumindest nicht ohne weiteres zur Selbstüberwachung und/oder Selbstkalibrierung geeignet. Außerdem sollen Messgeräte, die bspw. in einer Anlage der Prozessautomatisierungstechnik installiert sind, den eigentlichen Prozess nicht stören, daher, aber auch um die Kosten bspw. zur Herstellung der Messgeräte zu reduzieren, wird eine weitere Miniaturisierung und Vereinfachung angestrebt

Der Erfindung liegt die Aufgabe zugrunde, eine kompakte Vorrichtung zur Temperaturmessung vorzuschlagen, die die o.g. Nachteile nicht aufweist.

Die Aufgabe wird erfindungsgemäß durch einen Widerstandstemperatursensor sowie ein Messgerät mit einem solchen Widerstandstemperatursensor gelöst.

Hinsichtlich des Widerstandstemperatursensors wird die Aufgabe durch einen Widerstandstemperatursensor mit einem ersten Temperatursensorelement und einem zweiten Temperatursensorelement gelöst, welches erste Temperatursensorelement eine erste Messstrecke aufweist und welches zweite Temperatursensorelement eine zweite Messstrecke aufweist, wobei die erste und die zweite Messstrecke auf einem Substrat verlaufen, wobei das Substrat eine anisotrope thermische Ausdehnung mit wenigstens zwei sich voneinander unterscheidenden Ausdehnungsrichtungen aufweist, und wobei sich eine Projektion der ersten Messstrecke auf die Ausdehnungsrichtungen von einer Projektion der zweiten Messstrecke auf die Ausdehnungsrichtungen unterscheidet.

Anstelle des Substrats kann auch ein beliebiges anderes Trägerelement mit einer anisotropen thermischen Ausdehnung verwendet werden. Durch verwenden zweier unterschiedlicher Temperatursensorelemente, kann gewährleistet werden, dass eine ggfs. auftretende Drift des Widerstandstemperatursensors erkannt und/oder diagnostiziert werden kann. Außerdem kann beim Ausfall eines der Temperatursensorelemente die Bestimmung der Temperatur auch mit dem anderen der Temperatursensorelemente fortgesetzt werden. Das erste bzw. das zweite Temperatursensorelement kann also zum Überwachen des zweiten bzw. des ersten Temperatursensorelements eingesetzt werden.

Über die erste bzw. die zweite Messstrecke kann ein Wert und/oder ein Verlauf einer physikalischen Größe, hier der Temperatur, ermittelt werden. Die vorliegende Erfindung schlägt demnach vor, verschieden verlaufende Messstrecken zur Temperaturbestimmung zu verwenden. Weiterhin wird durch die vorliegende Erfindung vorgeschlagen, die Messstrecken auf einem Substrat mit einer anisotropen, d.h. richtungsabhängigen, thermischen Ausdehnung verlaufen zu lassen. Dafür kann das Substrat wenigstens zwei Richtungen mit einer unterschiedlichen thermischen Ausdehnung aufweisen. Das erste und das zweite Temperatursensorelement können also bspw. aus demselben Substrat bestehen, unterscheiden sich aber bzgl. der Messstrecken, die auf dem Substrat verlaufen. Dadurch ergibt sich auch, dass sich die erste und die zweite Messstrecke bzgl. der Projektion auf die Ausdehnungsrichtungen unterscheiden. Die Messstrecken können bspw. so verlaufen, dass sich die Komponenten der Messstrecken bzgl. der durch die Ausdehnungsrichtungen vorgegebenen Richtungen voneinander unterscheiden. Dadurch erfahren die Messstrecken, eben aufgrund des zugrunde liegenden Substrats mit anisotroper thermischer Ausdehnung, also auch eine thermische Ausdehnung und der über die jeweilige Messstrecke vorliegende Widerstand verändert sich. Dabei kann ferner ausgenutzt werden, dass der Widerstand der ersten Messstrecke und der zweiten Messstrecke eben aufgrund des Substrats mit anisotroper thermischer Ausdehnung sich nicht mit der gleichen Rate ändert, da ja auch bspw. der Temperaturausdehnungskoeffizienten des Substrats richtungsabhängig ist und sich je nach Richtung voneinander unterscheiden. Dies kann im Wesentlichen durch die Wärmeausdehnung des Substrats bedingt sein. Das Substrat kann also bspw. einen richtungsabhängigen Längenausdehnungskoeffizienten oder einen richtungsabhängigen Raumausdehnungskoeffizienten aufweisen. Die Größe dieses Effekts, d.h. der Wärmeausdehnung, kann dabei vom verwendeten Material aus dem das Substrat besteht abhängig sein. Die Wärmeausdehnung bzw. der Wärmeausdehnungskoeffizient selbst kann auch temperaturabhängig sein.

Schreibt man einer der Ausdehnungsrichtungen bspw. einen ersten Vektor zu und schreibt man bspw. der ersten Messstrecke einen zweiten Vektor zu, so ist die Projektion des zweiten Vektors auf den ersten Vektor durch den Vektor der in Richtung des ersten Vektors verläuft gegeben, der durch den Fußpunkt des Lotes des ersten Vektors, welches Lot vom Endpunkt des zweiten Vektors begrenzt wird. Selbstverständlich können auch mehrere Vektoren, die bspw. den Verlauf der ersten bzw. zweiten Messstrecke beschreiben, auf die Ausdehnungsrichtungen projiziert werden. Diese Projektion oder auch nur die Länge des projizierten Vektors kann zu einem Vergleich herangezogen werden, durch den bestimmt wird, ob die erste und die zweite Messstrecke sich hinsichtlich ihrer Projektion auf die Ausdehnungsrichtungen voneinander unterscheiden.

In einer Ausgestaltung des Widerstandstemperatursensors bestehen das erste und/oder das zweite Temperatursensorelement aus wenigstens einer Dünnfilmbeschichtung, welche Dünnfilmbeschichtung auf das Substrat aufgebracht ist. Die Dünnfilmbeschichtung kann dabei durch ein herkömmliches aus dem Stand der Technik bekanntes Verfahren, bspw. mittels physikalischem und/oder chemischen Gasabscheidungsverfahren auf das Substrat aufgebracht werden. Die Dicke der Dünnfilmschicht kann dabei im Mikrometerbereich ($\mu$m) liegen, insbesondere auch kleiner als 1 $\mu$m ($10^{-6}$ m) sein. Unter Dünnfilmbeschichtung sollen nicht nur Beschichtungen verstanden werden, die durch additive Prozess wie bspw. Sputtern hergestellt werden, sondern auch Beschichtungen, die durch subtraktive Prozesse wie bspw. Ätzen entstehen.

In einer Ausgestaltung des Widerstandstemperatursensors bildet die Dünnfilmbeschichtung einen Dünnfilmwiderstand. Somit kann eine, insbesondere eine einzige, insbesondere zusammenhängende, Dünnfilmbeschichtung genutzt werden, auf der zwei Messstrecken definiert sind. Dadurch kann ein kompakter Widerstandstemperatursensor hergestellt werden, der sich zudem selbst kalibrieren und/oder überwachen kann. Dabei wird der Effekt ausgenutzt, dass sich die auf das Substrat aufgebrachte Dünnfilmbeschichtung bei einer Ausdehnung des Substrats ebenfalls ausdehnt bzw. schrumpft und sich dadurch der elektrische Widerstand der ersten und der zweiten Messstrecke ändert.

In einer anderen Ausgestaltung des Widerstandstemperatursensors bestehen die erste Messstrecke aus einem ersten Dünnfilmwiderstand und die zweite Messstrecke aus einem zweiten Dünnfilmwiderstand, wobei der erste und der zweite Dünnfilmwiderstand auf unterschiedlichen Oberflächenbereichen des Substrats aufgebracht sind. Die erste Messstrecke kann demnach auch auf einer anderen Dünnfilmschicht, insbesondere in verschiedenen Oberflächenbereichen des Substrats, aufgebracht sein als die zweite Messstrecke. Bspw. können die Dünnfilmwiderstände und die zugehörigen Messstrecken und die zugehörigen Temperatursensorelemente auf gegenüberliegenden Seiten des Substrats aufgebracht sein.

In einer Ausgestaltung des Widerstandstemperatursensors verlaufen die erste bzw. die zweite Messstrecke so auf dem Substrat, dass die erste Messstrecke gegenüber der zweiten Messstrecke aufgrund der anisotropen thermischen Ausdehnung des Substrats eine unterschiedliche thermische Ausdehnung erfährt. Bspw. kann das Substrat in einer Richtung eine thermisch bedingte Kontraktion und in einer anderen Richtung eine thermische bedingte Expansion erfahren. Dies kann sich dann auch auf die erste und die zweite Messstrecke bzw. die auf dem Substrat aufgebrachte Dünnfilmbeschichtung in o.g. Weise auswirken.

In einer Ausgestaltung des Widerstandstemperatursensors verläuft die erste Messstrecke zumindest abschnittsweise entlang einer Ausdehnungsrichtung auf dem Substrat, die gegenüber einer Ausdehnungsrichtung entlang derer die zweite Messstrecke verläuft eine unterschiedliche thermische Ausdehnung aufweist.

In einer Ausgestaltung des Widerstandstemperatursensors sind mindestens ein erstes und ein zweites Paar elektrischer Kontakte vorgesehen, vermittels welcher Kontakte die erste und/oder die zweite Messstrecke kontaktierbar ist. Eines der Temperatursensorelemente kann also im Wesentlichen aus dem Substrat, der darauf aufgebrachten Dünnfilmbeschichtung, der vermittels der Dünnfilmbeschichtung definierten Messstrecke sowie den Kontakten zur Kontaktierung der Dünnfilmschicht bestehen. Der vorgeschlagen Widerstandstemperatursensor kann dann aus mindestens zwei, bevorzugt aus genau zwei, solcher Temperatursensorelemente bestehen. Die erste bzw. zweite Messstrecke verläuft dabei zwischen dem ersten bzw. zwischen dem zweiten paar von elektrischen Kontakten.

In einer Ausgestaltung des Widerstandstemperatursensors sind die erste bzw. die zweite Messstrecke durch das erste bzw. das zweite Paar elektrischer Kontakte vorgegeben. Durch die Positionierung der Kontakte auf der Dünnfilmbeschichtung könne die Messstrecken definiert werden. So können das erste Paar elektrischer Kontakte durch die die erste Messstrecke definiert wird bspw. an gegenüberliegenden Enden der Dünnfilmbeschichtung angeordnet werden. Ebenso kann das zweite Paar von Kontakten an gegenüberliegenden Enden der Dünnfilmbeschichtung angeordnet sein. Außerdem können die Kontakte so angeordnet sein, dass eine bspw. gedachte Verbindungslinie zwischen dem zweiten Paar elektrischer Kontakte eine bspw. gedachte Verbindungslinie zwischen dem ersten Paar von Kontakten sich in einem Winkel $\alpha$ (alpha) schneiden, wobei der Winkel $\alpha$ bevorzugt in Abhängigkeit der Ausdehnungsrichtungen des anisotropen Substrats gewählt wird, und besonders bevorzugt zwischen 20° und 160° liegt. Die bspw. gedachten Verbindungslinien können dabei bevorzugt mit den Ausdehnungsrichtungen des Substrats mit anisotroper thermischer Ausdehnung übereinstimmen.

In einer Ausgestaltung des Widerstandstemperatursensors sind die elektrischen Kontakte so auf dem Substrat angeordnet, dass die erste Messstrecke gegenüber der zweiten Messstrecke eine unterschiedliche thermische Ausdehnung erfährt.

In einer Ausgestaltung des Widerstandstemperatursensors sind die elektrischen Kontakte an jeweils im Wesentlichen gegenüberliegenden Enden der wenigstens einen Dünnfilmbeschichtung vorgesehen.

In einer Ausgestaltung des Widerstandstemperatursensors liegen die Kontakte an einer einzigen auf dem Substrat aufgebrachten Dünnfilmbeschichtung an.

In einer Ausgestaltung des Widerstandstemperatursensors liegen die Kontakte an unterschiedlichen, insbesondere voneinander getrennten, Dünnfilmbeschichtungen auf dem Substrat an.

In einer Ausgestaltung des Widerstandstemperatursensors weist die erste und/oder die zweite Dünnfilmbeschichtung eine Stärke von 0,5 μm bis 10 μm auf.

In einer Ausgestaltung des Widerstandstemperatursensors weist das Substrat eine Stärke von 300 μm bis 2 mm auf.

In einer Ausgestaltung des Widerstandstemperatursensors weist das Substrat eine erste Ausdehnungsrichtung a auf, in welcher eine thermische Ausdehnung erfolgt, wobei das Substrat eine zweite Ausdehnungsrichtung c aufweist, in welcher eine thermische Ausdehnung erfolgt,

In einer Ausgestaltung des Widerstandstemperatursensors ist die thermische Ausdehnung in der zweiten Ausdehnungsrichtung c geringer als die thermische Ausdehnung in der ersten Ausdehnungsrichtung a.

In einer Ausgestaltung des Widerstandstemperatursensors erfolgt entlang der Ausdehnungsrichtung a des Substrats eine thermisch bedingte Expansion und entlang der Ausdehnungsrichtung c des Substrats eine thermisch bedingte Kontraktion.

In einer Ausgestaltung des Widerstandstemperatursensors erfährt die erste und/oder die zweite Dünnfilmbeschichtung aufgrund der thermischen Ausdehnung des Substrats entlang der Ausdehnungsrichtung a eine Expansion und entlang der Ausdehnungsrichtung c eine Kontraktion.

In einer Ausgestaltung des Widerstandstemperatursensors besteht die wenigstens eine Dünnfilmbeschichtung aus einem einzigen Material.

In einer Ausgestaltung des Widerstandstemperatursensors weist das Material aus dem die wenigstens eine Dünnfilmbeschichtung besteht, im Wesentlichen denselben thermischen Widerstands- bzw. Ausdehnungskoeffizienten auf.

In einer Ausgestaltung des Widerstandstemperatursensors besteht das Substrat aus einem anisotropen kristallinen Material.

In einer Ausgestaltung des Widerstandstemperatursensors besteht das Substrat im Wesentlichen aus anisotropen beta-Eukryptit, LiAlSiO4 oder einem Lithium-Aluminium-Silikat.

In einer Ausgestaltung des Widerstandstemperatursensors weist das Substrat eine rechteckige, prismatische, ellipsoide oder kreisförmige Form auf.

Hinsichtlich des Messgeräts wird die Aufgabe durch ein Messgerät zur Bestimmung einer Temperatur mit einem Widerstandstemperatursensor nach einer der vorherigen Ausgestaltungen gelöst.

In einer Ausgestaltung des Messgeräts dienen die erste und die zweite Messstrecke dazu, eine umgebungsseitig vorliegende Temperatur zu bestimmen.

In einer Ausgestaltung des Messgeräts dienen die Widerstandsmessungen über die erste und die zweite Messstrecke zur Diagnose des Widerstandstemperatursensors bzw. des Messgerätes.

In einer Ausgestaltung des Messgeräts verfügt das Messgerät über eine Regel-/Auswerteeinheit, die dazu dient, die über die erste Messstrecke und über die zweite Messstrecke gemessenen Widerstände miteinander zu vergleichen.

In einer Ausgestaltung des Messgeräts weist das Messgerät zwei Messsignaleingänge auf, die dazu dienen das erste Temperatursensorelement und das zweite Temperatursensorelement mit der bspw. in einem Messumformer integrierten Regel-/Auswerteeinheit zu verbinden.

Ferner kann die Aufgabe durch ein entsprechendes Verfahren zur Herstellung und/oder zum Betreiben eines Widerstandstemperatursensor bzw. eines Messgerätes gelöst werden.

Eine weitere Ausgestaltung der Erfindung sieht vor, dass vermittels des ersten und des zweiten Temperatursensorelements jeweils eine Teilinformation, aus welcher sich insgesamt die Prozessgröße bestimmen lässt, ermittelt wird. Bei der Prozessgröße kann es sich bspw. um die Abweichung des Messsignals des ersten Temperatursensorelements von dem Messsignal des zweiten Temperatursensorelements handeln, wie es bspw. bei einer Kalibrierung verwendet wird.

Ferner kann der Widerstandstemperatursensor und/oder wenigstens das erste und/oder das zweite Temperatursensorelement als Heizelement dienen und/oder betrieben werden. Bspw. kann dann die anisotrope Ausdehnung des Substrats ausgenutzt werden, um den Widerstandstemperatursensor zu kalibrieren. Der Widerstandstemperatursensor kann dabei ferner auch als Heizelement eines thermischen Durchflussmessgerätes dienen.

Die Erfindung wird anhand der nachfolgenden Zeichnungen näher erläutert. Es zeigt:

Fig. 1: eine Draufsicht auf einen Widerstandstemperatursensor gemäß dem Stand der Technik,

Fig. 2: eine Draufsicht auf einen Widerstandstemperatursensor in einer Ausgestaltung der vorliegenden Erfindung, wobei das Substrat eine anisotrope thermische Ausdehnung aufweist,

Fig. 3: einen Widerstandstemperatursensor in einer weiteren Ausgestaltung der vorliegenden Erfindung, wobei die Messstrecke mäanderförmig verläuft,

Fig. 4: einen Widerstandstemperatursensor in einer weiteren Ausgestaltung der vorliegenden Erfindung, mit einer ebenfalls mäanderförmig verlaufenden Messstrecke,

Fig. 5: eine schematische Darstellung der kristallinen Struktur eines anisotropen Substrats bei Normaltemperatur,

Fig. 6: eine schematische Darstellung der kristallinen Struktur des anisotropen Substrats bei gegenüber Normaltemperatur erhöhter Temperatur,

Fig. 7: eine schematische Darstellung eines Querschnitts durch eine Ausgestaltung der vorgeschlagenen Erfindung, wobei der Dünnfilmwiderstand von einem inertisierenden Einbettungsmaterial und einer Substratabdeckung umgeben ist,

Fig. 8: eine schematische Darstellung eines Querschnitts durch eine andere Ausgestaltung der vorgeschlagenen Erfindung, bei der der Dünnfilmwiderstand lediglich von einem inertisierenden Einbettungsmaterial umgeben ist,

Fig. 9: eine schematische Darstellung zweier Messaufnehmer, die an einen Messumformer angeschlossen sind,

Fig. 10: eine schematische Darstellung eines Messaufnehmers mit eingebautem Messumformer, und

Fig. 11: eine schematische Darstellung einer Gerätearchitektur in einer industriellen Anlage.

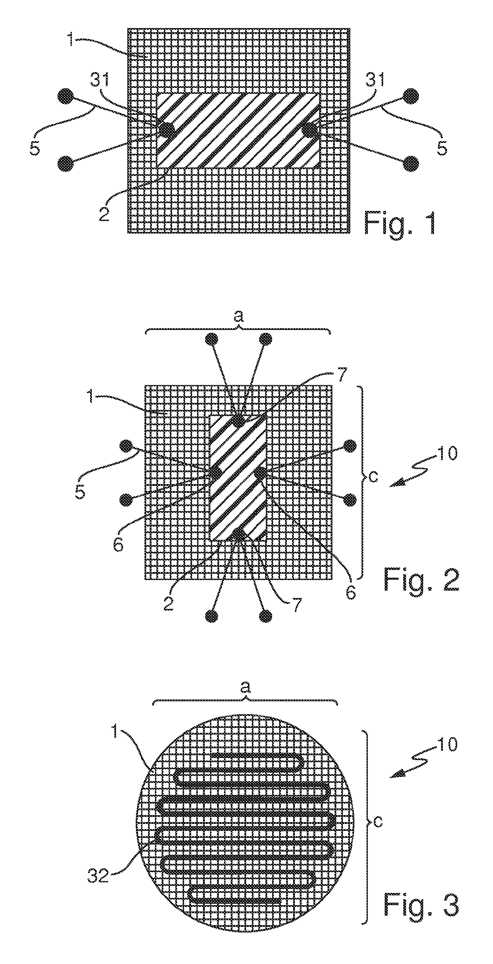

Figur 1 zeigt einen Widerstandstemperatursensor gemäß dem Stand der Technik. Dabei ist auf einem Substrat 1 eine Dünnfilmschicht 2 aufgebracht, die über elektrische Kontakte 31 kontaktierbar ist. Durch die Kontakte 31 wird eine Messstrecke auf der Dünnfilmschicht 2 definiert. Die Messstrecke verläuft dabei zwischen den Kontakten 31. Die Messstrecke weist einen sog. Dünnfilmwiderstand auf. Die Messstrecke und der sog. Dünnfilmwiderstand unterliegen dabei der thermischen Ausdehnung des zugrunde liegenden Substrats 1.

Ein Dünnfilmwiderstand ist allgemein eine Widerstandsart, die bspw. bei integrierten Schaltungen verwendet wird und aus einer dünnen Schicht aus widerstandsbehaftetem Material ausgebildet ist. Zum Ausbilden von Dünnfilmwiderständen können zahlreiche widerstandsbehaftete Materialien verwendet. Das Verhalten von solchen Dünnfilmwiderständen ist durch eine Anzahl von Parametern definiert, die den Widerstandswert, die Widerstandstoleranz und den Temperaturkoeffizienten des Widerstands (TCR) (das Ausmaß der Widerstandsänderungen bei einer Temperaturänderung) umfassen.

Der in Figur 1 gezeigte Widerstand wird in Vier-Leiter-Technik gemessen, d.h. zwischen zwei der Anschlussleitungen 5 fließt ein Strom, während zwischen den beiden anderen Anschlussleitungen 5 lediglich eine Spannung abgegriffen wird, diese also im Wesentlichen stromfrei sind.

Das im Ausführungsbeispiel gemäß Figur 1 verwendete Substrat 1 weist eine isotrope thermische Ausdehnung aus, so dass bei einer Temperaturänderung die Ausdehnung des Materials unabhängig von der räumlichen Orientierung erfolgt.

Figur 2 zeigt einen Widerstandstemperatursensor 10 gemäß einer Ausgestaltung der vorliegenden Erfindung. Der Widerstandstemperatursensor 10 dient dabei zur Temperaturmessung und weist eine Dünnfilmbeschichtung 2 einer Stärke zwischen 0,5 und 10 Mikrometer aus leitfähigen metallischen oder übergangsmetallhaltigen oder kohlenstoffhaltigen, oder Carbon-Nano-Tubes-haltigen Beschichtungsmaterialien auf, die auf einem flächigen Trägersubstrat 1 einer Stärke zwischen 300 Mikrometern und 2 mm aufgetragen sind, wobei das Trägersubstrat 1 anisotrope thermische Ausdehnungskoeffizienten aufweist, wobei die anisotropen Substratoberfläche eine bevorzugte Richtung a besitzt, bei der eine verstärkte thermische Ausdehnung in Richtung a' auftritt und in der zu a senkrechten Richtung c, die in der selben Ebene liegt, beim Erwärmen eine Kontraktion in Richtung c' vorliegt oder nur eine geringere thermische Ausdehnung verglichen mit der Ausrichtung a vorliegt, wodurch die verbundene Dünnfilmbeschichtung in Richtung a' eine Ausdehnung und in Richtung c' eine Zusammenziehung erfährt.

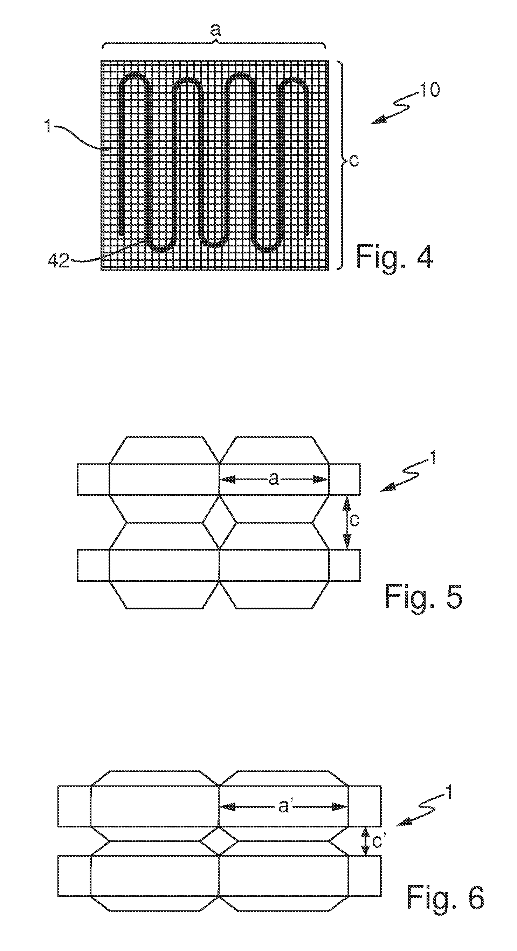

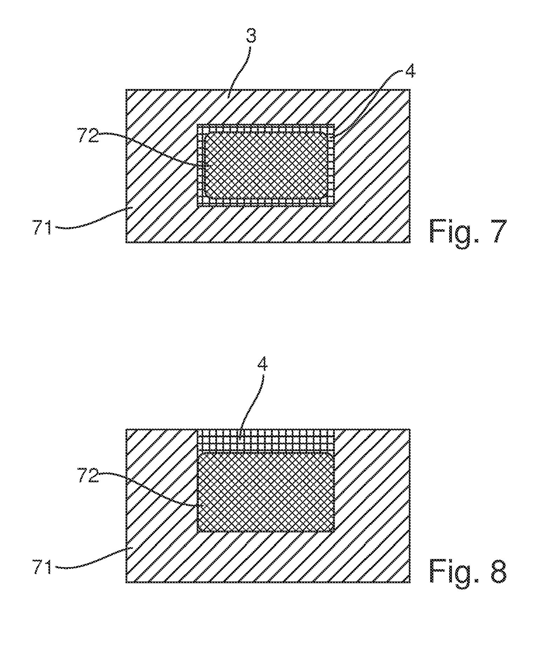

Der Widerstandstemperatursensor 10 kann weiterhin ein oder mehrere Dünnfilmsegmente bspw. desselben Beschichtungsmaterials 2 mit demselben thermischen Widerstandskoeffizient aufweisen, die jeweils in der Ausrichtung a und in der Ausrichtung c auf dasselbe anisotrope Trägersubstrat 1 aufgetragen sind. Die in Figur 2 gezeigte Dünnfilmbeschichtung 2 ist an gegenüber liegenden Enden in den Ausrichtungen von a und von c mit zwei oder mehreren elektrischen Anschlüssen in Form elektrischer Kontakte 6, 7 kontaktiert. Über die dadurch gebildeten Messpfade können Widerstandsmessungen durch die Kontaktierungen 6 an verschiedenen Beschichtungsabschnitten an demselben Beschichtungsmaterial 2 mit demselben thermischen Widerstandskoeffizienten auf einem anisotropen Substrat 1 für eine messtechnische Differenzbewertung verwendet werden. Das zu diesem Zweck verwendete Substrat 1 kann aus einem anisotropen kristallinen Material, z.B. einem Substrat 1 aus anisotropen kristallinen β-Eukryptit, LiAlSiO4, einem Lithium-Aluminium-Silikat, bestehen. Das Substrat 1 kann zu diesem Zweck auch eine rechteckige, prismatisch, ellipsoide oder kreisförmige flächige Formgebung aufweisen. So ist in Figur 3 ein Substrat mit einer im Wesentlichen kreisförmigen Kontur und in Figur 4 mit einer im Wesentlichen quadratischen Kontur gezeigt. Allgemein kann das Trägersubstrat 1 aus wenigstens einem anisotropen Material bestehen, das mindestens in einer Vorzugsrichtung eine negative thermische Expansion aufweist. Die insbesondere flächenförmigen Leiterbahnen 72 können vom Substrat 1, wie in Figur 7 und Figur 8 gezeigt, U-förmig umkleidet werden, wobei das Trägersubstrat dabei die Leiterbahnen 72 an den Seiten überragt. Die Leiterbahn(en) 72 können auch, vgl. Figur 7, vom anisotropen Substratmaterial 71 vollkommen umschlossen sein, wobei das die Leiterbahn 72 aufnehmende Trägersubstratbasisteil 71 mit einer zusätzlichen Substratflachteil 3 abgedeckt wird, das eine gleichsinnige anisotrope Ausrichtung wie das Basismaterial 71 aufweist. Andererseits kann wie in Figur 8 gezeigt die Leiterbahn 2 einfach mit einem Einbettungsmaterial "gedeckelt" sein.

Außerdem können beide Oberflächen des anisotropen Trägersubstrates 1 mit Leiterbahnen 2, 32, 42 ausgestattet sein.

Wie in Figur 3 und Figur 4 gezeigt, kann die Beschichtung aus mäanderförmigen, abgerundet abgewinkelten Leiterbahnen 32, 42 bestehen. Die Leiterbahnen 32, 42 können einen rechteckigen Querschnitt oder einen oval abgerundeten Querschnitt aufweisen.

Der Widerstandstemperatursensor 10 kann mehrschichtig zusammengesetzt sein, wobei ein mehrschichtiger, sandwich-artiger Aufbau mit planaren Anteilen aus anisotropen Trägersubstrat 1 und leitfähigen Dünnfilmbeschichtungen 2 besteht, die mit einem inertisierenden dielektrisch isolierenden Einbettungsmaterial 4 eingefasst sind.

Figur 5 und Figur 6 zeigen eine schematische Darstellung der Kristallinen Struktur des Materials aus dem das Substrat 1 besteht. Das Substrat 1 weist dabei zwei Hauptausdehnungsrichtungen aus, entlang derer das Substrat 1 bei einer Temperaturänderung eine Längenänderung erfährt. In Richtung a erfährt das Substrat eine Ausdehnung, während es in Richtung c eine Kontraktion erfährt. Dies ist durch die Strecken a' und c' in Figur 6 dargestellt. Auch die auf dem Substrat aufgebrachte Dünnfilmbeschichtung 2 erfährt daher eine vergleichbare Ausdehnung, woraufhin sich der elektrische Widerstand der Dünnfilmbeschichtung 2 ortsabhängig, bzw. entsprechend dem Verlauf der jeweiligen Messstrecke, verändert.

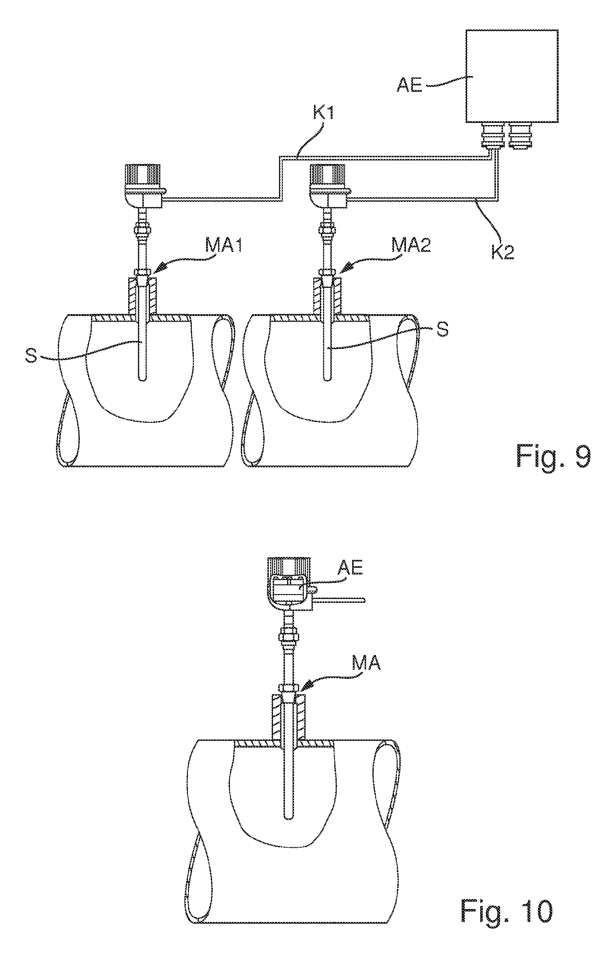

Figur 9 zeigte eine schematische Darstellung zweier Messaufnehmer MA1, MA2, die bspw. zur Überwachung einer Prozessgröße an einen Prozess, der in einer Leitung oder einem sonstigen Behälter abläuft, angeschlossen sind. Bei den Messaufnehmern MA1, MA2 kann es sich bspw. um die erfindungsgemäßen Widerstandstemperatursensoren 10 handeln, es können aber auch andere Sensoren verwendet werden. Die Firma Endress+Hauser ist Hersteller einer umfangreichen Palette von Widerstandsthermometern, Thermoelementen und den dazu passenden Schutzrohren S.

Diese Sensoren werden in ein Schutzrohr S eingeführt welches dem Prozess ausgesetzt ist. Die von den jeweiligen Sensoren über Anschlussleitungen K1, K2 übertragenen Messsignale werden einem Messumformer AE zugeführt, der wie im in Figur 9 gezeigten Fall abgesetzt von dem Messaufnehmer MA1 bzw. MA2 sein kann. Der Messaufnehmer AE verfügt zu diesem Zweck über zwei Messsignaleingänge, die über Kabel mit den entsprechenden Anschlüssen der Messaufnehmer verbunden sind. Bei den Messsignaleingängen kann es sich um 2-Leiter, 3-Leiter oder 4-Leiter-Anschlüsse handeln. So dass die Messsignaleingänge optimal entsprechend einem Messsignalabgriff des verwendeten Temperatursensorelements abgestimmt werden können. Denn wie bereits erwähnt kann der Widerstand eines Widerstandstemperatursensors in 2-, 3- oder 4-Leiter-Messung abgegriffen werden.

Durch den Messumformer AE können die Messsignale ausgewertet und ggf. Fehlermeldungen, wie bspw. im Fall einer Drift eines der Messaufnehmer oder beider Messaufnehmer MA1, MA2, ausgegeben werden. Andererseits kann das Messsignal, welches zur Aufbereitung und/oder Weiterverarbeitung, d.h. Messwertgewinnung verwendet wird, temperaturabhängig ausgewählt werden.

Insbesondere kann durch ein sog. Sensor-Transmitter-Matching eine hohe Genauigkeit der Messstelle, vor allem aber des Messgerätes, das aus Messaufnehmer MA1, MA2 und Messumformer AE besteht, erreicht werden. Dafür wird der Ausgang eines Widerstandstemperatursensors 10 linearisiert. Dies kann bspw. anhand der Callendar-van-Dusen-Gleichung geschehen:

$$R_T = R_0(1 + A \cdot T + B \cdot T^2 + (T - 100) \cdot C \cdot T^3)$$

dabei ist T die Temperatur, $R_T$ der gemessene ohmsche Widerstand, R0 der ohmsche Widerstand bei 0°C. Die Koeffizienten A, B, C dienen zur Anpassung des Temperatursensorelements und dem Messumformer AE. Dabei kann ein erster Satz von Koeffizienten A, B, C zur Anpassung des ersten Temperatursensorelements und ein zweiter Satz von Koeffizienten A', B', C' zur Anpassung des zweiten Temperatursensorelements eines erfindungsgemäßem Widerstandstemperatursensors 10 vorgesehen sein. Die Koeffizienten können bei einer Kalibrierung der Temperatursensorelemente bzw. des Widerstandstemperatursensors 10 ermittelt und bspw. in dem Messumformer AE hinterlegt werden.

Figur 10 zeigt im Unterschied zu Figur 9 nur einen Messaufnehmer MA. Der Messaufnehmer MA verfügt über einen eingebauten Messumformer AE, einen sog. Temperaturkopftransmitter. Bei dem Temperaturkopftransmitter handelt es sich bspw. um ein Zweileiter-Messgerät mit bspw. zwei Messeingängen und einem Analogausgang A. Der Messaufnehmer MA kann ein Temperatursensorelement, wie bspw. das in Figur 1 gezeigte, oder über zwei Temperatursensorelemente, wie z.B. den in Figur 2 gezeigten erfindungsgemäßen Widerstandstemperatursensor 10, verfügen. Im Fall von zwei Temperatursensorelementen können diese bspw. redundant ausgelegt werden. Die beiden Messeingänge des Messumformers AE können daher zum Anschließen eines Messaufnehmers MA mit einem erfindungsgemäßen Widerstandstemperatursensorelement, das über zwei Temperatursensorelemente verfügt, dienen. Dabei kann also das erste Temperatursensorelement an den ersten Messeingang und das zweite Temperatursensorelement an den zweiten Messeingang angeschlossen werden. Die Messsignale der beiden Temperatursensorelemente können in dem Messumformer AE (vor-)verarbeitet werden und/oder bereits diagnostische Funktionen ausgeführt werden. So kann der Messumformer AE, d.h. Temperaturkopftransmitter z.B. einen Leitungsbruch, -kurzschluss, -korrosion sowie Verdrahtungsfehler sicher erkennen. Außerdem kann vom Messumformer AE der Arbeitsbereich des Messaufnehmers MA und die Umgebungstemperatur überwacht werden. Außerdem kann die Korrosion der Messaufnehmeranschlussleitungen, die zum Verbinden des Messaufnehmer MA mit dem Messumformer AE dienen, überwacht werden, z.B. wenn Leitungswiderstände plausible Grenzen überschreiten. In einem solchen Fall kann bspw. eine entsprechende Fehlermeldung über den Analog-Ausgang, der bspw. ein 4..20 mA Ausgangssignal oder das HART-Protokoll verwendet, ausgegeben werden.

Ferner kann entweder in der Ausgestaltung gemäß Figur 9 oder Figur 10 aufgrund der beiden Messsignaleingänge eine sog. Sensor-Backup-Funktion vorgesehen sein, die auf das zweite Temperatursensorelement schaltet und dieses bspw. zur Ausgabe über den analogen Ausgang bringt, falls das erste Temperatursensorelement ausfällt. Auch können die beiden Messeingänge dazu dienen, auf das erste und das zweite Temperatursensorelement zu schalten, falls die beiden Temperatursensorelemente in verschiedenen Temperatur- bzw. Messbereichen eingesetzt werden sollen oder für den Einsatz in verschiedenen bei unterschiedlichen Temperaturen vorgesehen sind. Wie bereits erwähnt, kann auch eine Driftwarnung in Form eines Alarms vorgesehen sein, die bei einer Abweichung, die außerhalb eines vorgegebenen Grenzwerts liegt, ausgegeben wird.

Zusammen mit den genannten Komponenten bildet der Temperaturkopftransmitter die Gesamtmessstelle für verschiedenste Einsatzbereiche im industriellen Umfeld.

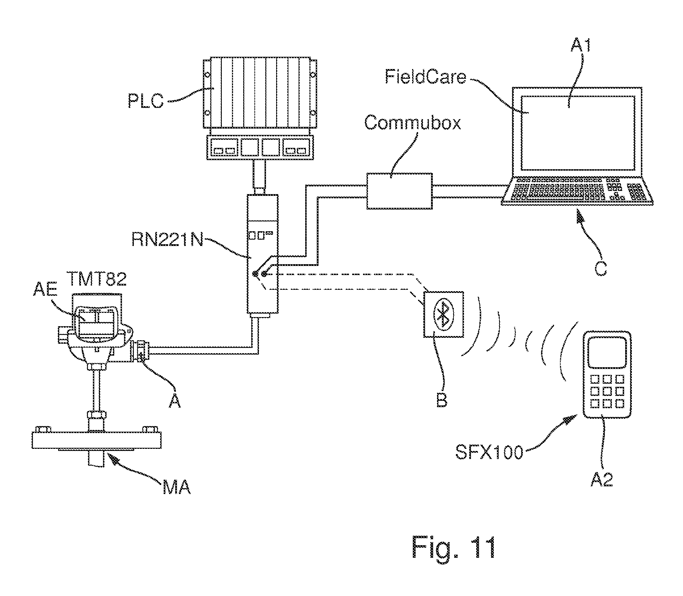

Figur 11 zeigt eine schematische Darstellung einer Gerätearchitektur wie sie bspw. in einer industriellen Anlage vorliegt. Das Messgerät TMT82 verfügt dabei über einen analogen Ausgang A über den es bspw. vermittels eines 4..20 mA Stromsignals und dem HART-Protokoll kommunizieren kann. Über Verbindungsleitungen ist der analoge Ausgang A mit einem sog. Speisetrenner RN221 N verbunden, der das Messgerät TMT82 mit Hilfsenergie versorgt und ein von dem Messgerät TMT82 ausgegebenes Messsignal bspw. ein Prozessleitsystem PLC weiter überträgt.

An den Speisetrenner RN221 N können auch weitere Kommunikationsschnittstellen B, Commubox angeschlossen werden, die eine Kommunikation zwischen den mit dem Speisetrenner RN221 N verbundenen Gerätschaften SFX100, C ermöglichen.

Wie in Figur 11 dargestellt, kann eine Bluetooth-Schnittstelle B an den Speisetrenner RN221 N angeschlossen werden, so dass mit einem Handheld SFX100, welches bspw. über eine Anzeigeeinheit A2 verfügt, kommuniziert und insbesondere Messwerte und/oder andere prozessrelevante Daten angezeigt werden können.

Ferner kann anstatt oder parallel zu der Bluetooth-Schnittstelle eine weitere Kommunikationsschnittstelle Commubox, bspw. der Firma Endress+Hauser, angeschlossen werden. Die weitere Kommunikationsschnittstelle Commubox ist eine bspw. eigensichere Schnittstelle für Messumformer AE, die HART-Signale auf USB-Signale umsetzt und dadurch die Kommunikation mit einem Computer C ermöglicht. Auf einem solchen Computer C kann wiederum ein Prozessdiagose- und/oder Wartungsprogramm, wie bspw. Fieldcare der Firma Endress+Hauser ablaufen. Selbstverständlich können auch auf diesem Computer dann Messwerte und/oder prozessrelevante Daten, insbesondere auf der Anzeigeeinheit A1, angezeigt werden.

**Bezugszeichenliste**

| | |
|---|---|
| 1 | Trägersubstrat |
| 2 | Beschichtungsmaterial |
| 3 | Substratabdeckung |
| 4 | inertisierendes Einbettungsmaterial |
| 5 | doppelseitige Kontaktierung |
| 6 | erster Paar von Kontakten |
| 7 | zweites Paar von Kontakten |
| a | erste Ausdehnungsrichtung |
| c | zweite Ausdehnungsrichtung |
| AE | Messumformer |
| MA | Messaufnehmer |
| MA1 | erster Messaufnehmer |
| MA2 | zweiter Messaufnehmer |
| SFX 100 | Handheld |
| B | Bluetooth-Schnittstelle |
| Commubox | USB-Schnittstelle |
| C | Computer |
| PLC | Prozessleitsystem |
| RN221 N | Speisetrenner |
| A1 | erste Anzeigeeinheit |
| A2 | zweite Anzeigeeinheit |
| Fieldcare | Diagnose-/Wartungsprogramm |
| A | analoger Ausgang |
| S | Schutzrohr |
| 72 | Leiterbahnen |
| 32 | Leiterbahnen |
| 31 | elektrische Kontakte |
| 42 | Leiterbahnen |
| a', c' | Längenänderung in Ausdehnungsrichtung a bzw. c |
| 10 | Widerstandstemperatursensor |

**Patentansprüche**

1.  Widerstandstemperatursensor (10)
    mit einem ersten Temperatursensorelement (6) und einem zweiten Temperatursensorelement (7), welches erste Temperatursensorelement (6) eine erste Messstrecke aufweist und welches zweite Temperatursensorelement (7) eine zweite Messstrecke aufweist,
    wobei die erste und die zweite Messstrecke auf einem Substrat (1) verlaufen,
    **dadurch gekennzeichnet dass**
    das Substrat (1) eine anisotrope thermische Ausdehnung mit wenigstens zwei sich voneinander unterscheidenden Ausdehnungsrichtungen (a, c) aufweist, und wobei sich eine Projektion der ersten Messstrecke auf die Ausdehnungsrichtungen (a) von einer Projektion der zweiten Messstrecke auf die Ausdehnungsrichtungen (c) unterscheidet.

2.  Widerstandstemperatursensor (10) nach Anspruch 1,
    wobei das erste und/oder das zweite Temperatursensorelement (6, 7) aus wenigstens einer Dünnfilmbeschichtung (2) bestehen, die auf das Substrat (1) aufgebracht ist, insbesondere dass die Dünnfilmbeschichtung (2) einen Dünnfilmwiderstand (2) bildet.

3.  Widerstandstemperatursensor (10) nach einem der vorherigen Ansprüche,
    wobei die erste bzw. die zweite Messstrecke so auf dem Substrat (1) verlaufen,
    dass die erste Messstrecke gegenüber der zweiten Messstrecke aufgrund der anisotropen thermischen Ausdehnung des Substrats (1) eine unterschiedliche thermische Ausdehnung erfährt.

**4.** Widerstandstemperatursensor (10) nach einem der vorherigen Ansprüche,
wobei die erste Messstrecke zumindest abschnittsweise entlang einer Ausdehnungsrichtung (a) auf dem Substrat (1) verläuft, die gegenüber einer Ausdehnungsrichtung (c) entlang derer die zweite Messstrecke verläuft eine unterschiedliche thermische Ausdehnung aufweist.

**5.** Widerstandstemperatursensor nach einem der vorherigen Ansprüche,
wobei mindestens ein erstes und ein zweites Paar elektrischer Kontakte (6, 7) vorgesehen sind, vermittels welcher Kontakte (6, 7) die erste und/oder die zweite Messstrecke kontaktierbar ist.

**6.** Widerstandstemperatursensor (10) nach Anspruch 5
wobei die erste bzw. die zweite Messstrecke durch das erste bzw. das zweite Paar elektrischer Kontakte (6, 7) vorgegeben sind.

**7.** Widerstandstemperatursensor nach Anspruch 5 oder 6,
wobei die elektrischen Kontakte (6, 7) so auf dem Substrat (1) angeordnet sind,
dass die erste Messstrecke gegenüber der zweiten Messtrecke eine unterschiedliche thermische Ausdehnung erfährt.

**8.** Widerstandstemperatursensor nach Anspruch 5, 6 oder 7,
wobei die elektrischen Kontakte (6, 7) an jeweils im Wesentlichen gegenüberliegenden Enden der wenigstens einen Messstrecke, insbesondere der wenigstens einen Dünnfilmbeschichtung (2), vorgesehen sind.

**9.** Widerstandstemperatursensor (10) nach einem der Ansprüche 5 bis 8,
wobei die Kontakte (6, 7) an einer einzigen auf dem Substrat (1) aufgebrachten Dünnfilmbeschichtung (2) anliegen.

**10.** Widerstandstemperatursensor (10) nach einem der Ansprüche 5 bis 9,
wobei die Kontakte (6, 7) an unterschiedlichen, insbesondere voneinander getrennten, Dünnfilmbeschichtungen (2) auf dem Substrat anliegen.

**11.** Widerstandstemperatursensor (10) nach einem der vorherigen Ansprüche,
wobei das Substrat (1) eine erste Ausdehnungsrichtung (a) aufweist, in welcher eine thermische Ausdehnung erfolgt,
wobei das Substrat (1) eine zweite Ausdehnungsrichtung (c) aufweist, in welcher eine thermische Ausdehnung erfolgt.

**12.** Widerstandstemperatursensor (10) nach einem der vorherigen Ansprüche,
wobei das Substrat aus einem anisotropen kristallinen Material besteht.

**13.** Messgerät zur Bestimmung einer Temperatur, insbesondere der Umgebungstemperatur an einer Messstelle, mit einem Widerstandstemperatursensor nach einem der vorherigen Ansprüche.

**14.** Messgerät nach Anspruch 13,
wobei die Widerstandsmessungen über die erste und die zweite Messstrecke zur Diagnose des Widerstandstemperatursensors bzw. des Messgerätes dienen.

**15.** Messgerät nach einem der Ansprüche 13 oder 14,
wobei das Messgerät über eine Regel-/Auswerteeinheit verfügt, die dazu dient, die über die erste Messstrecke und über die zweite Messstrecke gemessenen Widerstände miteinander zu vergleichen.

**Claims**

**1.** Resistance temperature sensor (10)
with a first temperature sensor element (6) and a second temperature sensor element (7), said first temperature sensor element (6) having a first measuring section and said second temperature sensor element (7) having a second measuring section,
wherein the first and second measuring sections are on a substrate (1), **characterized in that**
the substrate (1) has an anisotropic thermal expansion with at least two expansion directions (a, c) that differ from one another, and wherein a projection of the first measuring section onto the expansion directions (a) is different from a projection of the second measuring section onto the expansion directions (c).

2. Resistance temperature sensor (10) as claimed in Claim 1,
   wherein the first and/or the second temperature sensor element (6, 7) consists of at least one thin-film coating (2), which is applied on the substrate (1), particularly such that the thin-film coating (2) forms a thin-film resistance (2).

3. Resistance temperature sensor (10) as claimed in one of the previous claims,
   wherein the first and/or the second measuring section extend on the substrate (1) in such a way that the first measuring section experiences a different thermal expansion in relation to the second measuring section on account of the anisotropic thermal expansion of the substrate (1).

4. Resistance temperature sensor (10) as claimed in one of the previous claims,
   wherein the first measuring section extends at least in part along an expansion direction (a) on the substrate (1) which has a different thermal expansion with respect to an expansion direction (c) along which the second measuring section extends.

5. Resistance temperature sensor (10) as claimed in one of the previous claims,
   wherein at least a first and a second pair of electrical contacts (6, 7) are provided, by means of said contacts (6,7) the first and/or the second measuring section can be contacted.

6. Resistance temperature sensor (10) as claimed in Claim 5,
   wherein the first and the second measuring section are defined by the first and second pair of electrical contacts (6, 7) respectively.

7. Resistance temperature sensor as claimed in Claim 5 or 6,
   wherein the electrical contacts (6, 7) are arranged on the substrate (1) in such a way that the first measuring section experiences a different thermal expansion with respect to the second measuring section.

8. Resistance temperature sensor (10) as claimed in Claims 5, 6 or 7,
   wherein the electrical contacts (6, 7) are provided in each case at essentially opposing ends of the at least one measuring section, particularly the at least one thin-film coating (2).

9. Resistance temperature sensor (10) as claimed in one of the Claims 5 to 8,
   wherein the contacts (6, 7) are on a single thin-film layer (2) that is applied to the substrate (1).

10. Resistance temperature sensor (10) as claimed in one of the Claims 5 to 9,
    wherein the (6, 7) are on different thin-film layers (2) on the substrate, particularly thin-film layers that are separate from one another.

11. Resistance temperature sensor (10) as claimed in one of the previous claims,
    wherein the substrate (1) has a first expansion direction (a), in which a thermal expansion takes place,
    wherein the substrate (1) has a second expansion direction (c), in which a thermal expansion takes place.

12. Resistance temperature sensor (10) as claimed in one of the previous claims,
    wherein the substrate is made of an anisotropic crystalline material.

13. Measuring device for determining a temperature, particularly the ambient temperature at a measuring point, with a resistance temperature sensor as claimed in one of the previous claims.

14. Measuring device as claimed in Claim 13,
    wherein the resistance measurements via the first and the second measuring section are used for the diagnosis of the resistance temperature sensor or the measuring device.

15. Measuring device as claimed in one of the Claims 13 or 14,
    wherein the measuring device has a control/evaluation unit that is used to compare the resistance values measured via first measuring section and the second measuring section with one another.

**Revendications**

1.  Capteur de température à résistance (10)
    avec un premier élément de capteur de température (6) et un deuxième élément de capteur de température (7),
    lequel premier élément de capteur de température (6) comprend un premier tronçon de mesure et lequel deuxième élément de capteur de température (7) comprend un deuxième tronçon de mesure,
    pour lequel le premier et le deuxième tronçon de mesure s'étendent sur un substrat (1),
    **caractérisé**
    **en ce que** le substrat (1) présente une dilatation thermique anisotrope avec au moins deux directions de dilatation (a, c) distinctes l'une de l'autre, et pour lequel une projection du premier tronçon de mesure sur les directions de dilatation (a) se distingue d'une projection du deuxième tronçon de mesure sur les directions de dilatation (c).

2.  Capteur de température à résistance (10) selon la revendication 1,
    pour lequel le premier et/ou le deuxième élément de capteur de température (6, 7) se composent d'au moins un revêtement à couche mince (2), qui est appliqué sur le substrat (1), notamment en ce que le revêtement à couche mince (2) forme une résistance à couche mince (2).

3.  Capteur de température à résistance (10) selon l'une des revendications précédentes,
    pour lequel le premier ou le deuxième tronçon de mesure s'étendent sur le substrat (1) de telle sorte que le premier tronçon de mesure subit une dilatation thermique différente par rapport au deuxième tronçon de mesure en raison de la dilatation thermique anisotrope du substrat (1).

4.  Capteur de température à résistance (10) selon l'une des revendications précédentes,
    pour lequel le premier tronçon de mesure s'étend au moins partiellement le long d'une direction de dilatation (a) sur le substrat (1), qui présente une dilatation thermique différente par rapport à une direction de dilatation (c), le long de laquelle s'étend le deuxième tronçon de mesure.

5.  Capteur de température à résistance (10) selon l'une des revendications précédentes,
    pour lequel au moins une première et une deuxième paires de contacts électriques (6, 7) sont prévus, par l'intermédiaire desquels contacts (6,7) le premier et/ou le deuxième tronçon de mesure peuvent être mis en contact.

6.  Capteur de température à résistance (10) selon la revendication 5,
    pour lequel le premier ou le deuxième tronçon de mesure sont prédéfinis par la première ou la deuxième paire de contacts électriques (6, 7).

7.  Capteur de température à résistance (10) selon la revendication 5 ou 6,
    pour lequel les contacts électriques (6, 7) sont disposés sur le substrat (1) de telle manière que le premier tronçon de mesure subit par rapport au deuxième tronçon de mesure une dilatation thermique différente.

8.  Capteur de température à résistance (10) selon la revendication 5, 6 ou 7,
    pour lequel les contacts électriques (6, 7) sont prévus respectivement, pour l'essentiel, aux extrémités opposées de l'au moins un tronçon de mesure, notamment de l'au moins un revêtement à couche mince (2).

9.  Capteur de température à résistance (10) selon l'une des revendications 5 à 8,
    pour lequel les contacts (6, 7) sont appliqués sur un unique revêtement à couche mince (2) appliqué sur le substrat (1).

10. Capteur de température à résistance (10) selon l'une des revendications 5 à 9,
    pour lequel les contacts (6, 7) sont appliqués, sur le substrat, sur différents revêtements à couche mince (2), notamment séparés les uns des autres.

11. Capteur de température à résistance (10) selon l'une des revendications précédentes,
    pour lequel le substrat (1) présente une première direction de dilatation (a), dans laquelle intervient une dilatation thermique,
    pour lequel le substrat (1) présente une deuxième direction de dilatation (c), dans laquelle intervient une dilatation thermique.

12. Capteur de température à résistance (10) selon l'une des revendications précédentes,
    pour lequel le substrat est constitué d'un matériau cristallin anisotrope.

**13.** Appareil de mesure destiné à la détermination d'une température, notamment de la température ambiante sur un point de mesure, avec un capteur de température à résistance selon l'une des revendications précédentes.

**14.** Appareil de mesure selon la revendication 13,
pour lequel les mesures de résistance sur le premier et le deuxième tronçon de mesure servent à des fins de diagnostic du capteur de température à résistance ou de l'appareil de mesure.

**15.** Appareil de mesure selon la revendication 13 ou 14,
pour lequel l'appareil de mesure dispose d'une unité de régulation / d'exploitation, qui sert à comparer entre elles les résistances mesurées sur le premier tronçon de mesure et sur le deuxième tronçon de mesure.

Fig. 1

Fig. 2

Fig. 3

Fig. 4

Fig. 5

Fig. 6

3

72

4

71

Fig. 7

4

72

71

Fig. 8

Fig. 9

Fig. 10

PLC

FieldCare

Commubox

A1

RN221N

TMT82

AE

C

A

B

SFX100

A2

MA

Fig. 11

EP 2 585 801 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0828146 A1
- DE 202004021438 U1
- DE 102006005393 A1